# EUROPEAN PATENT APPLICATION

(11) **EP 3 125 502 A1**
(43) Date of publication of application: **01.02.2017**
(21) Application number: 15002276.2
(22) Date of filing: 31.07.2015
(51) Int. Cl.: H04L 29/08

(54) **METHOD FOR PROVIDING ACCESS TO A WEB SERVER**

(71) Applicant: GridSystronic Energy GmbH, 72461 Albstadt (DE)
(72) Inventor: Jägers, Stefan, 72411 Bodelshausen (DE)
(74) Representative: Raible Deissler Lehmann Patentanwälte PartG mbB

(57) **Abstract**

The invention provides for a method for providing access to a web server and an arrangement for performing said method. Access is provided by a first proxy server and a second proxy server on request.

## Description

### Field of the invention

The present invention relates to a method for providing access to a web server and an arrangement for performing said method. Furthermore, the invention relates to a computer program adapted for performing the method as described herein.

### Description of the related art

A web server is an information technology that processes requests via hypertext transfer protocol (http), the basic network protocol used to distribute information on the World Wide Web. The term can refer either to the entire computer system, an appliance, or specifically to the software that accepts and supervises the http requests.

The primary function of a web server is to store, process and deliver web pages to clients. The communication between client and server takes place using the http. Pages delivered are most frequently html documents, which may include images, style sheets and scripts in addition to text content.

Web servers can be run on different technical devices as computers and machines within a production plant. To Request in contact with the web server on this machine this machine needs an IP address. To access a web server via the Internet this web server needs a public IP address. The problem is that in many cases the machine should not be available from the Internet for safety reasons. Furthermore, the number of public IP addresses is limited.

In a typical environment the hosts and servers of an internal network access the Internet via Net Address Translation (NAT) routers. NAT technology provides a method of accessing the Internet with hosts in a Local Area Network (LAN) solving the problem of insufficient IP addresses. Furthermore, the internal hosts in the LAN are invisible to the Internet, i.e., hosts in the Internet cannot proactively access internal hosts in the LAN.

Many organizations begin to use private addresses to establish internal LANs. Furthermore, some internal hosts in such a LAN are required to store resources and can be accessed by users on the Internet. For access from the Internet a so called proxy server can be used.

A proxy server is a computer system or an application running on a computer acting as an intermediary for requests from clients seeking resources from other servers. Therefore, a proxy server or proxy can be used for allowing communication between two computers through the proxy server. Proxy servers are used for facilitating access to content on the World Wide Web whereupon providing anonymity. For that matter proxy servers can forward http requests. Furthermore, proxy servers allow web sites to make web requests to externally hosted resources, when cross-domain restrictions prohibit the web site from linking directly to the outside domain. Proxy servers also allow the browser to make web requests to externally hosted content on behalf of a website when cross-domain restrictions prohibit the browser from directly accessing the outside domains.

Document EP 1 363 441 A1 discloses a method for reducing the number of global IP addresses required for servers located in private network comprising the steps of configuring corresponding relationship information between an external address as well as other characteristic information and an internal address as well as other characteristic information in the internal server, matching the relevant information carried by the messages exchanged between the internal network and the Internet with the configured corresponding relationship information, and processing the message according to the matching result.

Document CN 10 424 3210 A discloses a method and system for remotely having access to administrative web pages of routers. The method comprises the step of establishing a transmission control protocol (TCP) long connection between routers and a cloud server. The cloud server determines monitoring port numbers corresponding to the routers. The address of the cloud server and the monitoring port numbers are transmitted to the corresponding routers through TCP long connection.

Document CN 10 306 4979 A discloses a router and a method for implementing the same to process web page data. The method comprises the steps of storing web pages data from a web page server, receiving a web page browsing request from a client, judging whether contents of a requested web page are stored or not, and transmitting the stored contents of the web page to the client if the contents of the requested web page are stored.

Document CN 10 406 5749 A provides a method and device for accessing a web page through a proxy and is applied to management control over extranet accessing. The method described uses a router serving as the proxy.

Document GB 24 20 205 A shows a system for communicating process control information. The system comprises a first web service associated with a process control system, a second web service associated with a data consuming application and an information server communicatively coupled to the first and second web services via a network. The information server preferably includes a router that is adapted to convey messages between the first and second web services.

Document US 2008 298342 A1 discloses a computer-implemented method for performing inter-domain communication in a web browser including receiving first data from a first domain at a router.

Document MY 136816 A discloses an architecture for generating and maintaining a terminal device connecting from an external client to an internal intranet client behind a firewall or router.

### Summary of the invention

In contrast thereto, the invention proposes a method according to claim 1, an arrangement according to claim 9, and a computer program according to claim 15. The computer program can be stored on a data carrier which is also subject of the present invention. Furthermore, the invention refers to a central server suitable for performing at least steps of an embodiment of the present invention.

The method described is suitable for providing access to a web server running on a machine. Access is provided by a first proxy server and a second proxy server on request of an entity, e.g. a computer used by a user.

In one embodiment, content according to the request is sent from the web server through the second proxy server and the first proxy server to the entity.

Typically, a command for providing access is forwarded by the first proxy server and the second proxy server to the machine or web server of the machine to be accessed. Content according to the request is sent from the web server to the entity requesting access via the second proxy server and the first proxy server.

The first proxy server can be a http server. The second proxy server can be a socket server. The first proxy server forwards received relative links and changes received absolute links to relative links before forwarding.

In one embodiment, access is requested by a web window, e.g. provided by a web browser. A web browser also called a browser is a software application for retrieving, presenting and traversing information resources on the World Wide Web. Typically, the web browser uses the http protocol. The web browser can provide at least one web window.

In another embodiment, access is requested by a first web window, a second web window receives the requested content via the first proxy server. These web windows can be run on a computer, particularly on one computer, and can be provided by one web browser running on the computer. The second web window and the machine do not know each other. Only the first web window has knowledge of the machine and its web browser. The first web window provides the links, e.g. http links, for the second web window.

Access can be requested by the first web window by sending a Request command. Usually, the answer to a Request command is a so-called Response command sending the requested content.

In another embodiment, a central server is provided which can be connected to the first proxy server. In this case, content according to the request can be sent from the web server through the second proxy server, the central server and the first proxy server to the entity which has sent the request.

The central server can have knowledge of the identity of the second web window, e.g. with help of a cookie, and of the machine to be accessed. The connection or assignment between identity of the second web window and the machine can be contained within a table. This table can be stored on the central server.

Alternatively, the table can be stored within the computer sending the request. A central server is not necessary in performing the method as described herein but might be helpful for performing the method.

In case, a central server is provided, this central server can communicate with the first proxy server, the second proxy server and the computer or entity sending the request, e.g. the first web window.

Furthermore, data transferred second proxy server can be encrypted. In one embodiment, data transferred between the central server and the second proxy server is encrypted.

In case there is a data transfer between the first proxy server and the second proxy server, data transferred between the first proxy server and the second proxy server can be encrypted.

Additionally, to the encryption or instead of the encryption, a VPN connection (VPN; virtual private network) can be used.

The arrangement for performing access to a web server running on a machine is particularly suitable for performing the method as described herein. The arrangement comprises a first proxy server and a second proxy server. Typically, the second proxy server is in contact to the web server to be accessed. The arrangement can comprise more than one proxy server, each second proxy server is in contact to at least one machine to be accessed.

In one embodiment, a central server is provided which can be in contact to the first proxy server. In this case, the central server can be in contact to the second proxy server as well. The fist proxy server and the central server can communicate with each other.

The second proxy server can be an embedded system. An embedded system is a computer system having a dedicated function within an electronic system. In this case, the embedded system is suitable for allowing access to and control of a technical device, e.g. a machine, via an electronic data line. Furthermore, the second proxy server can be a software running on an electronic device.

Furthermore, the arrangement can comprise a firewall. This firewall can be provided between the central server and the second proxy server. In another embodiment, the firewall is provided between the first proxy server and the second proxy server.

The arrangement can comprise a computer as entity to request access. The computer can comprise a first web window and a second web window running on the computer. The second web window shows the content requested with help of the first web window. In this case, the first web window provides the link, e.g. the http link, for the second web window.

The arrangement can comprise a table or a chart containing assignments between identities of entities, e.g. a web browser, particularly the second web browser, requesting access and the machines to be accessed. This table can be stored on the central server.

The method shown is suitable for accessing a web server which is installed on a machine, e.g. an industrial machine running on a computing unit using at least two proxy servers. The machine does not need a public IP address, access can be provided in compliance with safety requirements.

A proxy server is a computer system or an application running on a computer acting as an intermediary for requests from clients seeking resources from other servers. Therefore, a proxy server or proxy can be used for allowing communication between two computers through the proxy server. Proxy servers are used for facilitating access to content on the World Wide Web whereupon providing anonymity. For that matter proxy servers can forward http requests. Furthermore, proxy servers allow web sites to make web requests to externally hosted resources, when cross-domain restrictions prohibit the web site from linking directly to the outside domain. Proxy servers also allow the browser to make web requests to externally hosted content on behalf of a website when cross-domain restrictions prohibit the browser from directly accessing the outside domains.

The web server usually comprises one or more web sites forming the content to be accessed. A web site is a set of related web pages typically served from a single web domain.

Within the communication lines routers and firewalls can be used. A router is a networking device that forwards data packets between computer and networks. Typically, a router is connected to two or more data lines from different networks. In case that a data packet comes in one of the data lines, the router reads the address information in the packet to determine its ultimate destination. A firewall forms a barrier provided to prevent unauthorized communication between computer networks or hosts.

Moreover, the invention refers to a central server suitable for performing at least one step of the method as described herein.

Further features and embodiments of the invention will become apparent from the description and the accompanying drawings.

It will be understood that the features mentioned above and those described hereinafter can be used not only in the combinations specified, but also in other combinations or on their own, without departing from the scope of the present invention.

### Brief description of the drawings

In the drawings,
Figure 1 is a diagram showing an arrangement according to the invention,
Figure 2 is a schematic total view of one scenario of the method as described herein.
Figure 3 is a diagram showing another arrangement according to the invention,
Figure 4 is a schematic view of data packages.

### Detailed description

The figures are described cohesively and in overlapping fashion, the same reference numerals denoting identical parts.

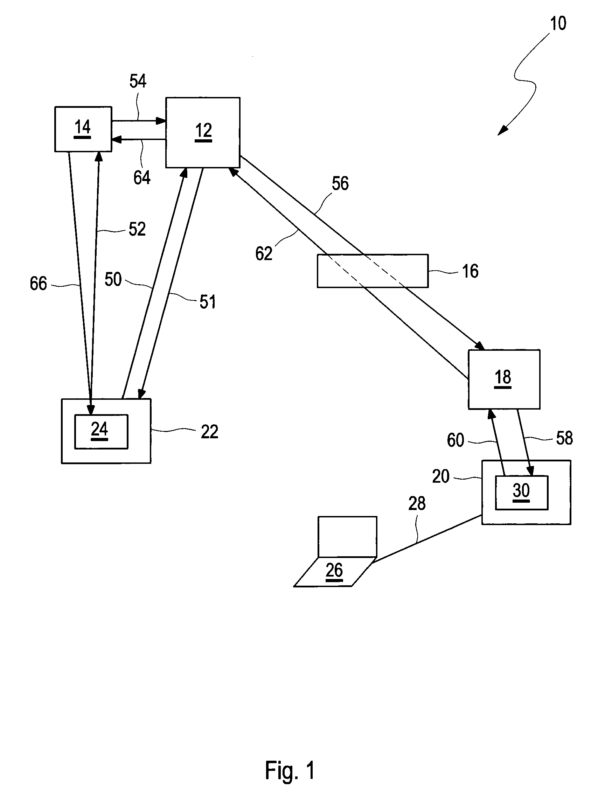

Figure 1 shows an embodiment of the arrangement for performing the method as described herein overall denoted with reference number 10. The drawing shows a central server 12 connected to a first proxy server 14, a firewall 16, an embedded 18 serving as a second proxy server, a machine 20, a first web window 22 running on a computer, and an internal second web window 24 running on the same computer within the first web browser 22. Furthermore, the drawing shows a computer 26 being in contact to the machine 20 by an internal line 28 allowing access to the machine 20.

A web server 30 installed on the machine is suitable for storing, processing and delivering web pages to clients, e.g. the computer 26. The web server 30 can also refer to a link. As the machine 20 has no public IP address it cannot be accessed via the Internet. Anyway, the components shown in figure 1 are connected via the Internet.

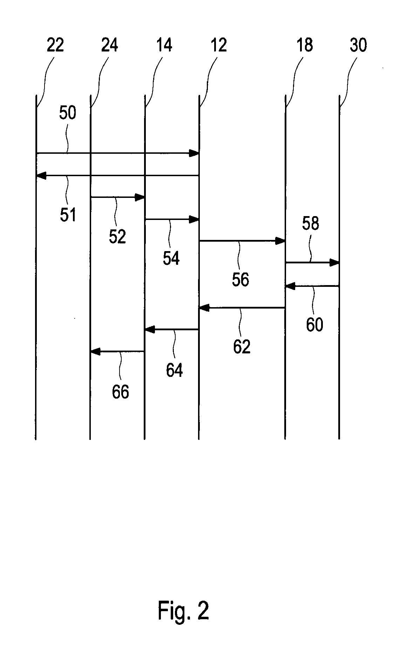

The communication between the components in figure 1 visualized by the arrows is illustrated in figure 2.

Figure 2 illustrates an embodiment of the method proposed with help of a scenario diagram. Lines representing entities already shown in figure 1, namely the first web window 22, the second web window 24, the first proxy server 14, the central server 12, the embedded system 18, the web server 30 running on the machine (reference number 20 in figure 1).

In a first step 50 the first web browser 22 sends a Request command to the central server 12 specifying its identity and/or the identity of the second web window 24, e.g. by a cookie or cookies, and the target, i.e. the machine or web server, the user of the first web window 22 wants to access. In a second step 51, the central server 12 sends information needed and/or a confirmation. In a third step 52, the second web window 24 contacts the first proxy server 14 giving the identification, particularly the cookie corresponding to the cookie of the first web window 22. In a fourth step 54, the first proxy server 14 forwards the information received in the second step 52 to the central server 12.

A cookie is a small piece of data sent from a website and stored in a user's web browser while the user is browsing that website. Cookies are a reliable mechanism, e. g. for websites, to remember stateful information or to record the user's browsing activity. In the context of the method proposed herein, cookies can be used by the first proxy server to identify the second web browser.

In a fifth step 56, the central server 12 sends the request of the web windows22 and 24 to the embedded system 18. In a sixth step 58, the embedded system 18 sends the request to the web server 30. The content requested by the web browser 22 and 24 is sent via the embedded system 18 (arrow 60) to the central server 12 (arrow 62) to the first proxy server 14 (arrow 64) to the second web window 24 (arrow 66).

The first proxy server can assign requests with help of a cookie. Furthermore, a table or chart can be used assigning identity, e.g. a cookie, of second web browser, to machine which is target of the second web browser. This table can be stored within the central server. Usually, a cookie is transferred only on request.

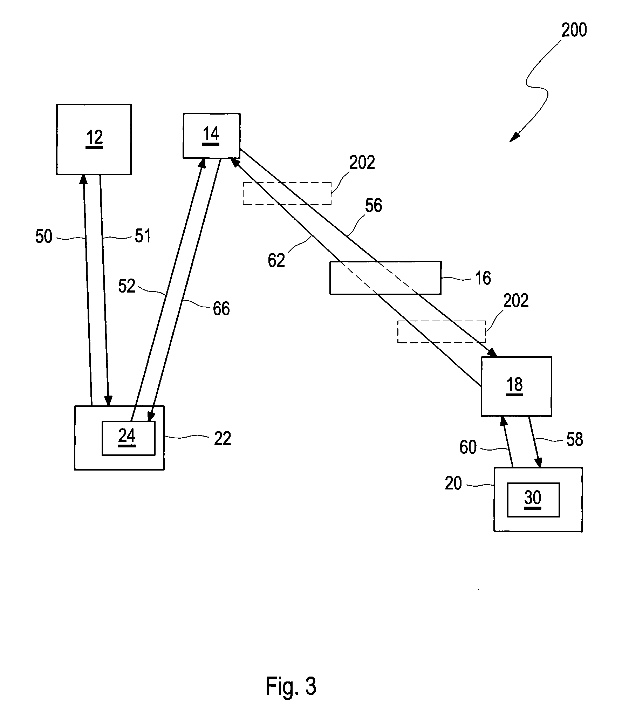

Figure 3 shows another embodiment of the arrangement 200 for performing the method described herein using the same reference numerals as in Figure 2. The arrangement comprises a central server 12, a first proxy server 14, a firewall 16, an embedded system 18 as a second proxy server, a machine 20 running a web browser 30, a first web window 22 and a second web window. Furthermore, VPN interfaces 202 for a secure data transfer.

The VPN interfaces 202 can be implemented in software running on the fist proxy server 14 and the second proxy server 18. VPN interfaces can be used in the arrangement 10 shown in figure 2. In this case, the VPN interfaces 202 can be implemented in software running on the central server 12 and the second proxy server 18.

In contrast to Figure 2, there is no data transfer between the central server 12 an the first proxy server 18 (steps 54 and 64). Furthermore, the fist proxy server 14 and the embedded system 18 as the second proxy server communicate with each other (steps 56 and 62).

Data exchange between the first web window 22 an the central server 12 (steps 50 and 51) is optional. Information provided by the central server 12 can be stored in a computer running the first web window 22 and the second web window 24.

In a first step 50 the first web browser 22 sends a Request command to the central server 12 specifying its identity and/or the identity of the second web window 24, e.g. by a cookie or cookies, and the target, i.e. the machine or web server, the user of the first web window 22 wants to access. In a second step 51, the central server 12 sends information needed and/or a confirmation. In a third step 52, the second web window 24 contacts the first proxy server 14 giving the identification, particularly the cookie corresponding to the cookie of the first web window 22.

In a fourth step 56, the second proxy server 14 sends the request of the web windows 22 and 24 to the embedded system 18. In a fifth step 58, the embedded system 18 sends the request to the web server 30. The content requested by the web browser 22 and 24 is sent via the embedded system 18 (arrow 60) to the first proxy server 14 (arrow 62) to the second web window 24 (arrow 66).

As mentioned before, the first step 50 and the second step 51 are optional. However, in the embodiment shown information or data can be exchanged between the first proxy server 13 and the central server 12.

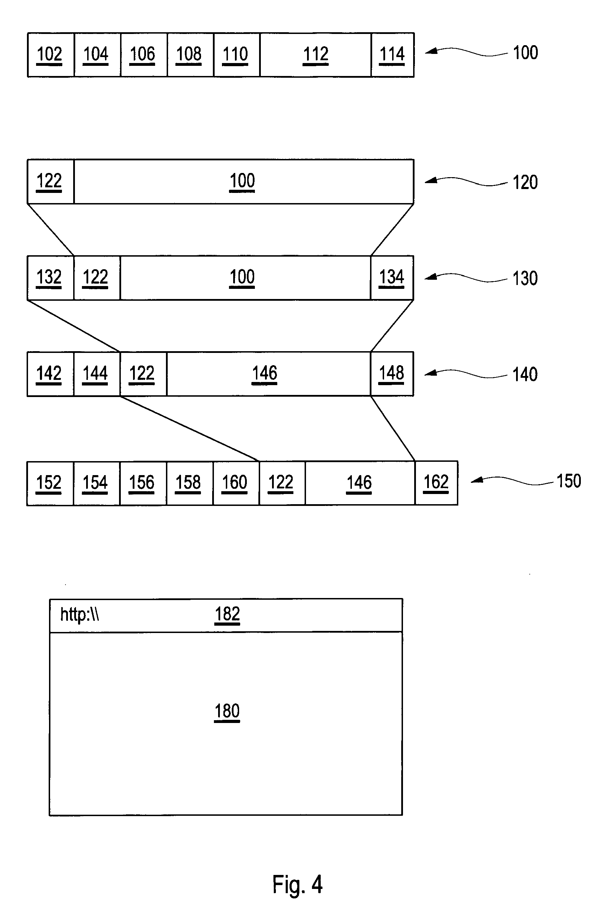

Figure 4 shows in schematic views data packages which can be transferred within the method as described herein. Reference number 100 indicates a data package as transferred according to TCP/IP via the Internet. The data package 100 comprises a Media Access Control (MAC) address 102, an IP address 104, a target address 106, a TCP/IP header 108, and a http protocol header 110. Furthermore, the data package 100 comprises the data 112 itself and optionally a check sum 114.

Reference number 120 depicts a data package as sent in step 52 according to figures 1 and 2. The data package comprises a Request command 122 and a data package 100 as shown above. A Request command indicates that the entity sending this command requests access to data.

Reference number 130 indicates a data package as sent in step 54 according to figures 1 and 2 comprising an identifier 132, the Request command 122, the data package 100 and check information 134.

Reference number 140 depicts a data package as sent in step 56 according to figure 1 and 2. The data package 140 comprises security data 142, e.g. referring to an encryption, a target address 144, namely the address of the machine as provided by the central server, the Request command 122, data 146 comprising the data package 100 and the check information 134 and further check data 148.

Reference number 150 indicates a data package as sent in step 58 according to figures 1 and 2. The data package 150 comprises a MAC address 152, an TCP/IP header 154, a target address 156, a TCP header 158, a http protocol header 160, the Request command 122, the data 146, and further check data 162.

As a result, the machine performs its web server showing data 180 according to the requested http address 182. This data is sent back to the second web browser in steps 60, 62, 64 and 66 according to figures 1 and 2 using a Response command. This Response command replaces the Request command. Apart from that, the data transfer takes place as shown in figure 3.

A Response command is a command indicating that the entity sending data sends this data to another entity which has requested the data with help of a Request command.

## Claims

1. Method for providing access to a web server running on a machine, wherein access is provided by a first proxy server and a second proxy server on request.

2. Method according to claim 1, wherein content according to the request is sent from the web server through the second proxy server and the first proxy server.

3. Method according to claim 1 or 2, wherein access is requested by at least one web window.

4. Method according to claim 3, wherein access is requested by a first web window, a second web window receives the requested content via the first proxy server.

5. Method according to claim 4, wherein access is requested by the first web window by sending a Request command.

6. Method according to one of claims 1 to 5, wherein a central server is provided connected to the first proxy server.

7. Method according to claim 6, wherein content according to the request is sent from the web server through the second proxy server, the central server and the first proxy server.

8. Method according to one of claims 1 to 7, wherein data transferred to the second proxy server is encrypted.

9. Arrangement for performing access to a web server running on a machine, particularly suitable for performing a method according to one of claims 1 to 8, comprising a first proxy server and a second proxy server.

10. Arrangement according to claim 9, comprising a central server connected to the first proxy server.

11. Arrangement according to claim 9 or 10, wherein the second proxy server is an embedded system.

12. Arrangement according to one of claims 9 to 11, wherein the arrangement comprises a firewall.

13. Arrangement according to one of claims 9 to 12, comprising a computer for running a first web window and a second web window.

14. Arrangement according to one of claims 9 to 13, comprising a table containing assignments between identities of entities requesting access and the machines to be accessed.

15. Computer program comprising means for performing at least one step of the method according to one of claims 1 to 8 when run on a computer.
